## Europäisches Patentamt
## European Patent Office
## Office européen des brevets

(19)

(11) Veröffentlichungsnummer: **0 006 416**
**A1**

(12)
# EUROPÄISCHE PATENTANMELDUNG

(21) Anmeldenummer: 79100021.9

(22) Anmeldetag: 04.01.79

(51) Int. Cl.³: **F 16 K 1/44**, F 16 K 1/52

(30) Priorität: 26.06.78 CH 6921/78

(71) Anmelder: **LGZ LANDIS & GYR ZUG AG, Konzern-Patentabteilung, CH-6301 Zug (CH)**

(43) Veröffentlichungstag der Anmeldung: 09.01.80 Patentblatt 80/1

(72) Erfinder: **van Heijningen, Jacques, Brunnenweid, CH-5643 Sins (CH)**

(84) Benannte Vertragsstaaten: **FR GB IT**

(54) **Zweistufen-Gasventil.**

(57) Zweistufen-Gasventil mit einem Ventilgehäuse (1) und einem Antriebselement (12) zur aufeinanderfolgenden Betätigung zweier Stellglieder (5, 9). Ein erstes Stellglied (5) ist bei Kleinlast geschlossen und öffnet erst bei Vollast. Ein zweites Stellglied (9) ist im Gasstrom in Reihe mit einer Blende (6) geschaltet und öffnet bei Kleinlast. Nur die Blende (6) bestimmt die Kleinlast-Durchflussmenge. Sie ist durch eine die Stellung der Stellglieder (5, 9) nicht beeinflussende Bewegungsrichtung des Antriebselementes (12) von ausserhalb des Ventilgehäuses (1) einstellbar. Als Stellglieder dienen vom Hub eines Stössels (12) betätigte Ventilteller (5, 9), von denen der eine bei Vollast öffnet und an sich selbst die Blende (6), einen Ventilsitz (8) und den Ventilteller (9) für Kleinlast trägt. Als Blende (6) dienen zwei aufeinanderliegende Lochscheiben (13, 14), die durch Drehen des Stössels (12) gegeneinander verstellbar sind.

EP 0 006 416 A1

- 1 -

## Zweistufen-Gasventil

Die Erfindung bezieht sich auf ein Zweistufen-Gasventil nach dem Oberbegriff des Patentanspruches 1.

Industrie-Gasbrenner, deren Brennleistung verstellbar ist, müssen meist in einer Kleinlaststellung gezündet werden. Erst wenn die Kleinlastflamme richtig brennt, soll die Gas-Durchflussmenge des Brenners erhöht werden können. Eine solchermassen abgestufte Gasfreigabe kann beispielsweise mit zwei in der Gaszuleitung parallel geschalteten Gas-Ventilen erfolgen. Eine aufwandmässig günstigere Lösung stellt ein zweistufig öffnendes Ventil dar, dessen Oeffnungsbewegung in einer Kleinlaststellung gestoppt werden kann.

Bei Betätigung des Ventiles durch einen gegen die Kraft einer Schliessfeder wirkenden hydraulischen Antrieb geschieht dies, indem dessen Pumpe durch einen während der Oeffnungsbewegung betätigten Schalter abgeschaltet wird, ohne ein Rückströmventil im Pumpenkreislauf zu öffnen.

Die in der Gasindustrie meist verwendeten Gasventile mit einem gegen einen rohrförmigen Ventilsitz gepressten flachen Ventilteller weisen in ihrer Weg-Gasmenge-Kennlinie zu Beginn des Oeffnungsweges des Ventiltellers einen sehr steilen Anstieg der Gas-Durchflussmenge auf. Es können daher

./.

PA 2033

- 2 -

bereits kleine Abwanderungen im Schaltpult des die Kleinlaststellung bestimmenden Schalters zu unzulässig grossen Durchflussänderungen führen.

Ferner kann der nötige Ventilhub für eine gewünschte Kleinlast bereits so gering sein, dass er mit einem zweistufigen
Antrieb nicht mehr realisierbar ist, weil die Schaltdifferenz des Schalters grösser ist als der nötige Ventilhub.

Durch eine entsprechende Profilierung des Ventiles kann wohl
eine langsamere Zunahme der Gasmenge erreicht werden, doch
kann dies dann wieder zu Schwierigkeiten führen, wenn die
Sicherheitszeit nur 2 Sekunden beträgt, wobei hier unter
Sicherheitszeit die Zeit verstanden wird, die vom Beginn
des Oeffnens bis zur Erteilung eines Befehls zum Schliessen
des Gasventiles verstreicht, falls keine Flamme entstanden
ist.

Bei zweistufig geregelten Brennern, die entweder mit Kleinlast oder mit Vollast betrieben werden können, muss ein längeres Verweilen des Ventiles in der Kleinlaststellung möglich sein. Durch geringe Lecks im hydraulischen System des
Antriebes kann der Hub des Ventils so weit zurückgehen, bis
die Schaltdifferenz des Schalters durchlaufen ist und dieser
die Pumpe wieder kurz einschaltet. Die damit verbundenen
Gasdurchfluss-Aenderungen können beträchtlich sein und das
Gas-Luft-Mengenverhältnis bei Gebläsebrennern unzulässig
beeinflussen.

Der Erfindung liegt daher die Aufgabe zugrunde, ein zweistufiges Gasventil zu schaffen, dessen Kleinlast-Gasmenge
rasch erreicht wird, von geringen Hubänderungen des Antriebselementes unabhängig und trotzdem in ihrer Grösse innerhalb
vorgegebener Grenzen einstellbar ist.

Die Erfindung ist im Patentanspruch 1 gekennzeichnet.

./.

PA 2033

Nachfolgend wird ein Ausführungsbeispiel der Erfindung an Hand zweier Zeichnungsfiguren näher erläutert:

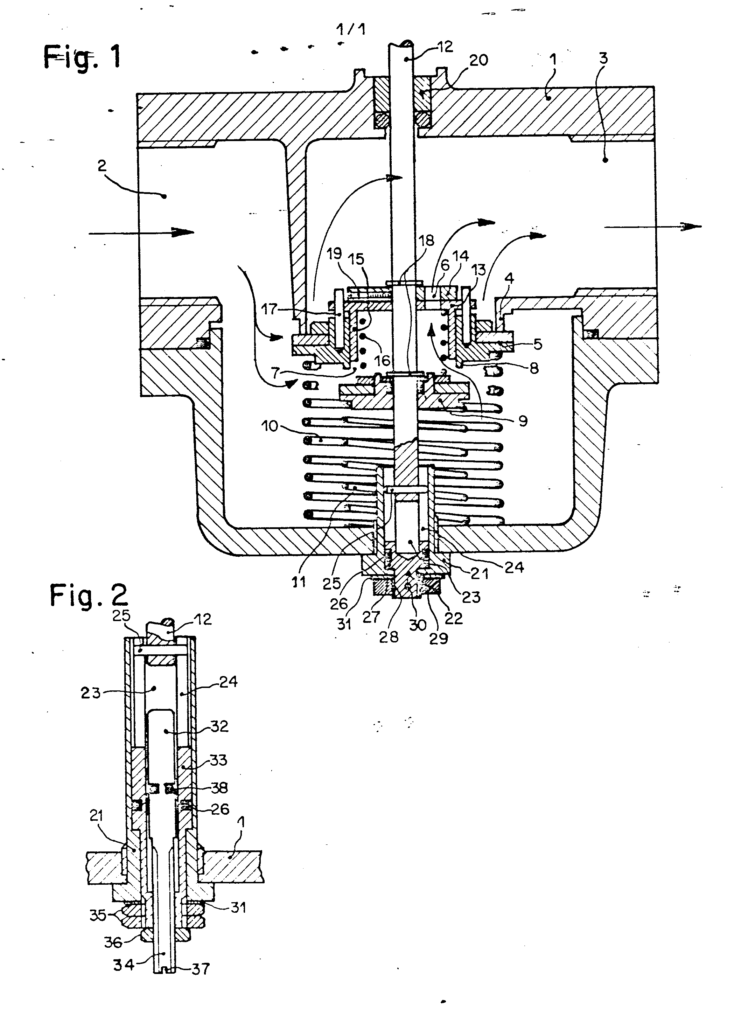

Die Fig. 1 zeigt ein Zweistufen-Gasventil und die Fig. 2 eine etwas anders gestaltete Verstelleinrichtung.

Beide Figuren sind im Schnitt dargestellt.

Gemäss der Fig. 1 besteht das Gasventil aus einem Ventilgehäuse 1 mit je einem Anschluss für einen Gaseintritt 2 und einen Gasaustritt 3 sowie aus einem feststehenden ersten Ventilsitz 4, dem ein erstes, als Ventilteller 5 ausgebildetes Stellglied zugeordnet ist. Der Ventilteller 5 trägt an sich selbst eine Blende 6 und eine Oeffnung 7 für den Durchfluss des Gases bei Kleinlast sowie einen zweiten Ventilsitz 8 für ein zweites, ebenfalls als Ventilteller 9 ausgebildetes Stellglied. Der zweite Ventilteller 9 ist relativ zum ersten Ventilteller 5 verstellbar. Beide werden in der Schliesstellung des Gasventiles von je einer Feder 10 bzw. 11 dichtend gegen die Ventilsitze 4 bzw. 8 gedrückt.

Als gemeinsames Antriebselement für die beiden Ventilteller 5 und 9 dient ein die Ventilteller zentrisch durchdringender Stössel 12. Dessen Bewegung senkrecht zu den Dichtungsflächen der beiden Ventilsitze 4, 8 hebt die beiden Ventilteller 5, 9 nacheinander und entgegen den Kräften der beiden Schliessfedern 10 bzw. 11 von ihren Ventilsitzen 4 bzw. 8 ab. Als Blende 6 dienen zwei federnd aufeinander liegende Lochscheiben 13 und 14, von denen die eine Lochscheibe 13 drehfest, doch längsverschiebbar im ersten Ventilteller 5 gelagert und die andere Lochscheibe 14 mit dem Stössel 12 fest verbunden ist. Die zweite Lochscheibe 14 bildet gleichzeitig einen Anschlag zur Uebertragung der Längsbewegung des Stössels 12 auf den ersten Ventilteller 5, während die erste Lochscheibe 13 einen Kragen 15 aufweist, mit dem sie in die Oeffnung 7 des ersten Ventiltellers 5 eindringt und sich in

./.

PA 2033

diesem zentriert. Eine weitere Feder 16, deren Kraft kleiner ist als diejenige der zweiten Schliessfeder 11, stützt sich auf dem zweiten Ventilteller 9 ab und drückt die längsbewegbare Lochscheibe 13 gegen die Lochscheibe 14. Zwei im Ventilteller 5 eingepresste Bolzen 17 sichern die bewegbare Lochscheibe 13 gegen ein Verdrehen. Ferner weist der Stössel 12 zwei Einstiche auf für je eine Spreizscheibe 18 zur Uebertragung der Längskräfte vom Stössel 12 auf die Ventilteller 5 und 9. Eine Stiftschraube 19 verbindet die zweite Lochscheibe 14 drehfest mit dem Stössel 12.

Der Stössel 12 ist zweiseitig im Ventilgehäuse 1 gelagert, und zwar auf der Seite, die dem nicht dargestellten Antrieb zugewandt ist, an einer Dichtungsstelle 20 und auf der gegenüberliegenden Seite in einer im Ventilgehäuse 1 dicht eingesetzten Hülse 21. In der Hülse 21 befindet sich ein Bolzen 22, in den der Stössel 12 in einer Bohrung 23 eindringt. Der Bolzen 22 weist einen Schlitz 24 auf, in dem ein den Stössel 12 durchdringender Stift 25 geführt ist. Dadurch bildet sich eine die Längsbewegung des Stössels 12 nicht beeinflussende Kupplung zum beliebigen Verdrehen des Stössels 12. Der Bolzen 22 besitzt zu diesem Zweck eine O-Ring-Dichtung 26 und eine Schulter 27 sowie einen die Hülse 21 durchdringenden Gewindeteil 28. Eine Mutter 29 ist auf den Gewindeteil 28 aufgeschraubt und mit einem Schwerspannstift 30 drehsicher gehalten. Durch Verdrehen der Mutter 29 kann somit über den Bolzen 22 und den Stift 25 der Stössel 12 zum Einstellen der Blende 6 verstellt werden. Eine Federscheibe 31 zwischen der Mutter 29 und der Hülse 21 dient zur Erzeugung der nötigen Reibung zum Verhindern einer ungewollten Verstellung.

Bei der Verstelleinrichtung zum Einstellen der Kleinlast-Gasmenge nach der Fig. 2 ist im Gegensatz zum Beispiel der Fig. 1 noch ein längsverstellbarer Anschlag 32 für eine Maximalstellung des Stössels 12 bei Vollast vorgesehen. Aehnlich wie für die Fig. 1 beschrieben, ist in der im Ventil-

./.

gehäuse 1 befestigten Hülse 21 ein Drehteil 33 gelagert, der ebenfalls eine Bohrung 23 und einen Schlitz 24 für den Stössel 12 mit seinem Stift 25 aufweist, doch besitzt der Drehteil 33 an seinem äusseren Ende sowohl ein Innen- als auch ein Aussengewinde. Im Innengewinde ist ein am Anschlag 32 angeformter Gewindebolzen 34 eingeschraubt. Auf dem Aussengewinde sitzen zwei Kontermuttern 35. Eine weitere Kontermutter 36 befindet sich auf dem Gewindebolzen 34, der an seinem Ende noch einen Schraubenschlitz 37 aufweist. Zwei O-Ringe 26 und 38 dienen der Abdichtung.

Das beschriebene Gasventil nach der Fig. 1 arbeitet wie folgt: Solange vom Ventilantrieb keine Kraft auf den Stössel 12 ausgeübt wird, liegen beide Ventilteller 5 und 9 unter der Wirkung der Schliessfedern 10 und 11 an ihren Ventilsitzen 4 bzw. 8 auf. Mit zunehmendem Hub des Stössels 12, in der Fig. 1 nach unten, legt sich zuerst die untere Spreizscheibe 18 an den Ventilteller 9 an und beginnt diesen zu öffnen. Nach einem geringen Oeffnungsweg erreicht der Oeffnungsquerschnitt bereits einen grösseren Wert als der wirksame Querschnitt der Blende 6. Diese ist jetzt bezüglich des Gasstroms mit dem vom Ventilteller 9 geöffneten Ventil in Reihe geschaltet und bestimmt allein die Durchflussmenge bei Kleinlast. Die Darstellung in der Fig. 1 entspricht dieser Stellung. Ein weiterer Hub des Stössels 12 bewirkt vorerst keine Durchflusserhöhung mehr. In dieser Stellung kann ein Schalter im Ventilantrieb den weiteren Hub des Stössels 12 stoppen. Ueber die Mutter 29, den Bolzen 22 und den Stössel 12 kann nun unter Ueberwindung der von der Federscheibe 31 erzeugten Reibung die Lochscheibe 14 von ausserhalb des Ventilgehäuses 1 her verstellt und damit der wirksame Durchflussquerschnitt für das Gas eingestellt werden, ohne dabei die Stellung der beiden Stellglieder 5 und 9 zu verändern. Der erste Ventilteller 5 liegt noch auf dem Ventilsitz 4 auf und hat dabei genügend Reibung, so dass er sich nicht mitdreht.

./.

Die Lochmuster der beiden Lochscheiben 13 und 14 sind so gewählt, dass die Durchflussänderung etwa proportional mit dem
Verdrehungswinkel erfolgt, was eine gute Feineinstellung ermöglicht.

Ein auf diese Weise eingestellter Gasdurchfluss bleibt über
einen vom erwähnten Schalter ohne weiteres einhaltbaren Hubbereich des Ventiltellers 9 immer der gleiche. Erst wenn der
Schalter überbrückt wird und der Hub weiter zunimmt, kommt
die Lochblende 13 stirnseitig auf dem Ventilteller 5 zum
Aufliegen, hebt den Ventilteller 5 von seinem Ventilsitz 4
ab und bringt das Ventil in eine der gewünschten Durchflussmenge bei Vollast entsprechende Stellung.

Die Verstelleinrichtung der Fig. 2 wirkt sinngemäss wie vorgängig für die Fig. 1 beschrieben. Durch Lösen der Mutter
36 und Verstellen am Schraubenschlitz 37 ist es zusätzlich
möglich, auch noch den maximalen Hub des Stössels 12 bei
Vollast durch mehr oder weniger weites Einschrauben des Anschlages 32 einzustellen.

Die beschriebene Anordnung kann nicht nur in neuen Ventilen
angewandt, sondern es können damit auch bestehende Ventile
ergänzt werden, ohne dass Aenderungen am Antrieb oder am
Ventilkörper nötig sind.

An Stelle der beschriebenen Tellerventile könnte das gleiche
Prinzip auch an Drehschieberventilen oder Drosselklappen angewandt werden, wobei dann z.B. die Ventilstellung durch
eine Drehbewegung des Antriebselementes verstellt wird, die
Grösse des Kleinlast-Gasdurchflusses aber mit einer Hubbewegung einstellbar wäre.

./.

- 1 -

PATENTANSPRUECHE

1. Zweistufen-Gasventil mit einem Ventilgehäuse und wenigstens einem darin angeordneten und zwischen den Stellungen Zu, Kleinlast und Vollast verstellbaren Stellglied, dadurch gekennzeichnet, dass ein einziges Antriebselement (12) für die Betätigung zweier Stellglieder (5 bzw. 9) vorhanden ist, von denen das erste Stellglied (5) bei Kleinlast geschlossen ist und bei Vollast die Durchflussmenge bestimmt und das zweite, der Kleinlast dienende Stellglied (9) bezüglich des Gasstroms in Reihe mit einer die Durchflussmenge bei Kleinlast bestimmenden Blende (6) geschaltet ist, wobei zur Einstellung der Durchflussmenge der Blende (6) das Antriebselement (12) von ausserhalb des Ventilgehäuses (1) in einer nur die Blende (6), aber nicht die Stellung der Stellglieder (5, 9) verändernden Bewegungsrichtung verstellbar ist.

2. Zweistufen-Gasventil nach Patentanspruch 1, dadurch gekennzeichnet, dass das erste Stellglied (5) einem feststehenden ersten Ventilsitz (4) des Ventilgehäuses (1) zugeordnet ist und an sich selbst die Blende (6) und eine Oeffnung (7) für den Durchfluss des Gases bei Kleinlast sowie einen Ventilsitz (8) für das zweite, relativ zum ersten verstellbare Stellglied (9 bzw. 5) trägt.

3. Zweistufen-Gasventil nach Patentanspruch 2, dadurch gekennzeichnet, dass die beiden Stellglieder Ventilteller (5, 9) sind, deren gemeinsames Antriebselement ein die Ventilteller (5, 9) zentrisch durchdringender Stössel (12) ist, dessen Längsbewegung senkrecht zu den Dichtungsflächen der beiden Ventilsitze (4, 8) entgegen den Kräften zweier Schliessfedern (10 und 11) wirkt und die Ventilteller (5,9) nacheinander von ihren Ventilsitzen (4, 8) abhebt, dass als Blende (6) zwei durch Federdruck aufeinander liegende Lochscheiben (13, 14) dienen, von denen die eine Lochscheibe (13) drehfest, doch längsverschiebbar im ersten Ventilteller

./.

PA 2033

- 2 -

(5) gelagert und die andere Lochscheibe (14) mit dem Stössel (12) fest verbunden ist, und dass ferner eine die Längsbewegung des Stössels (12) nicht beeinflussende Kupplung (21, 22, 23, 24, 25; 33, 35) zum beliebigen Verdrehen des Stössels (12) vorhanden ist.

4. Zweistufen-Gasventil nach Patentanspruch 3, dadurch gekennzeichnet, dass die Kupplung (21, 33, 35) zum Verdrehen des Stössels (12) zusätzlich einen längsverstellbaren Anschlag (32) aufweist.

./.

PA 2033

Fig. 1

Fig. 2

0006416

1/1

PA 2033

0006416

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | **EINSCHLÄGIGE DOKUMENTE** | | |
| | <u>FR - A - 2 110 603</u> (S.A. LEBLANC) <br> * Seite 2, Zeile 26 bis Seite 3, Zeile 3; Seite 4, Zeilen 14-17 * <br><br> -- | 1-3 | F 16 K 1/44 <br> 1/52 |
| | <u>US - A - 3 631 894</u> (GRAHAM-WHITE SALES CORP.) <br> * Ansprüche 1,4,5 * <br><br> -- | 1-3 | |
| | <u>DE - A - 2 518 335</u> (J. VAILLANT KG) <br> * Seite 3, Zeile 24 bis Seite 4, Zeile 31 * <br><br> -- | 1 | RECHERCHIERTE SACHGEBIETE (Int. Cl.³) <br><br> F 16 K |
| A | <u>FR - A - 1 487 387</u> (CHAFFOTEAUX & MAURY) | | |
| A | <u>US - A - 3 439 711</u> (THERMAL HYDRAULICS CORP.) | | |
| A | <u>US - A - 1 921 827</u> (S. KERSTEN) <br><br> ---- | | |

KATEGORIE DER GENANNTEN DOKUMENTE

X von besonderer Bedeutung
A technologischer Hintergrund
O nichtschriftliche Offenbarung
P Zwischenliteratur
T der Erfindung zugrunde liegende Theorien oder Grundsätze

E älteres Patentdokument, das jedoch erst am oder nach dem Anmeldedatum veröffentlicht worden ist
D in der Anmeldung angeführtes Dokument
L aus andern Gründen angeführtes Dokument

& Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 28-09-1979 | DE SMET |

EPA form 1503.1  06.78